# EUROPEAN PATENT SPECIFICATION

(11) **EP 0 581 342 B1**
(45) Date of publication and mention of the grant of the patent: **02.01.1997**
(21) Application number: 93201477.2
(22) Date of filing: 24.05.1993
(51) Int. Cl.: B41M 5/38

(54) **Dye-donor element for use according to thermal dye sublimation transfer**
Farbstoffdonorelement zur Anwendung in der thermischen Farbstoffsublimationsübertragung
Elément donneur de colorant pour le transfert thermique de colorants par sublimation

(30) Priority: 14.07.1992 EP 92202155
(43) Date of publication of application: 02.02.1994
(73) Proprietor: AGFA-GEVAERT naamloze vennootschap, B-2640 Mortsel (BE)
(72) Inventor: Defieuw, Geert, B-2640 Mortsel (BE); Vanmaele, Luc, B-2640 Mortsel (BE); Janssens, Wilhelmus, B-2640 Mortsel (BE)

(56) References cited:
- EP-A- 0 352 006
- EP-A- 0 442 360
- EP-A- 0 483 793
- EP-A 0 453 020

## Description

### 1. Field of the invention.

The present invention relates to dye-donor elements for use according to thermal dye sublimation transfer.

### 2. Background of the invention.

Thermal dye sublimation transfer also called thermal dye diffusion transfer is a recording method in which a dye-donor element provided with a dye layer containing sublimating dyes having heat transferability is brought into contact with a receiver sheet and selectively, in accordance with a pattern information signal, heated with a thermal printing head provided with a plurality of juxtaposed heat-generating resistors, whereby dye from the selectively heated regions of the dye-donor element is transferred to the receiver sheet and forms a pattern thereon, the shape and density of which is in accordance with the pattern and intensity of heat applied to the dye-donor element.

A dye-donor element for use according to thermal dye sublimation transfer usually comprises a very thin support e.g. a polyester support, one side of which is covered with a dye layer, which contains the printing dyes. Usually an adhesive or subbing layer is provided between the support and the dye layer. Normally the opposite side is covered with a slipping layer that provides a lubricated surface against which the thermal printing head can pass without suffering abrasion. An adhesive layer may be provided between the support and the slipping layer.

The dye layer can be a monochrome dye layer or it may comprise sequential repeating areas of different colored dyes like e.g. cf cyan, magenta, yellow and optionally black hue. When a dye-donor element containing three or more primary color dyes is used, a multicolor image can be obtained by sequentially performing the dye transfer process steps for each color.

Many of the dyes proposed for use in thermal dye sublimation transfer are not sufficient in performance because they yield inadequate transfer densities at reasonable coating coverages. Especially for transfer on transparant film materials as receiving element, the transfer densities obtained are too low.

For obtaining sufficient cyan densities on transparant film receiving elements the class of the so-called indoaniline dyes (as described e.g. in US 4829047) and the class of cyan dyes as described in US 5026677 are well suited.

A primary colored dye layer, for example, a magenta or cyan or yellow dye layer, may comprise only one primary colored dye (a magenta, cyan or yellow dye respectively) or may comprise a mixture of two or more primary colored dyes of the same hue (two magenta, two cyan or two yellow dyes respectively).

The so-called additive colors green, red and blue in the obtained prints are realised by printing sequentially the primary colors on each other; thus a green color on the print is obtained by printing sequentially cyan and yellow colored dyes, blue by printing sequentiallly cyan and magenta colored dyes, So in fact these shades consist of mixtures of dyes.

Dye images containing mixtures of dyes frequently show an increased fading rate due to a photochemical effect, known as catalytic fading of dye mixtures.

This phenomenon was investigated in textile dyeing by Rembold and Kramer (see Journal of the Society of Dyers and Colourists, vol. 94 (1978), pages 12-17) and by Asquith and Ingham (see Journal of the Society of Dyers and Colourists, vol.89 (1973), pages 81-85). Catalytic fading is related to the observation that the lightfastness of certain dyes applied to textiles alone is much better than when applied as mixtures. In most reported cases, the lightfastness of cyan, violet or red dyes deteriorates when a yellow dye is added.

Indoaniline dyes have a favourable effect on catalytic fading especially in dye mixtures for obtaining black colored images. However there are still strong catalytic fading effects in the green colored images composed of yellow and cyan dyes, with cyan indoaniline dyes as well as with other cyan azomethine dyes. Moreover, many indoaniline dye; have poor light stability.

EP-A 483793 discloses a dye donor element for thermal sublimation dye transfer comprising on a support a dye layer having a mixture of cyan dyes wherein one of the cyan dyes is an indoaniline dye. EP-A 453020 discloses a black colored dye donor element comprising a dye layer containing a mixture of a yellow, magenta and cyan dye. The cyan dye may be a cyan thiazolylazoaniline dye, cyan indoaniline dye or a cyan azomethine dye. The yellow dyes are of the dicyanovinyl aniline type.

Therefore, it is an object of the present invention to provide dye-donor elements, in particular cyan dye donor elements yielding transferred dye images of high density showing no or decreased catalytic fading effects in the green colored image areas.

It is another object of the present invention to provide cyan dye-donor elements, containing mixtures of cyan colored dyes, yielding transferred cyan dye images showing improved light stability.

Other objects will become apparent from the description given hereinafter.

### 3. Summary of the invention.

These and other objects are achieved by using a dye-donor element comprising a support provided with a dye layer containing a cyan indoaniline dye and/or another cyan azomethine dye, characterized in that said dye layer further contains a cyan thiazolylazoaniline dye.

Dye-donor elements according to the present invention yield transferred images of high density, showing less catalytic fotofading in the green colored image areas and improved light stability.

### 4. Detailed description of the invention.

Cyan thiazolylazoaniline dyes for use according to the present invention correspond to the following general formula (I) : 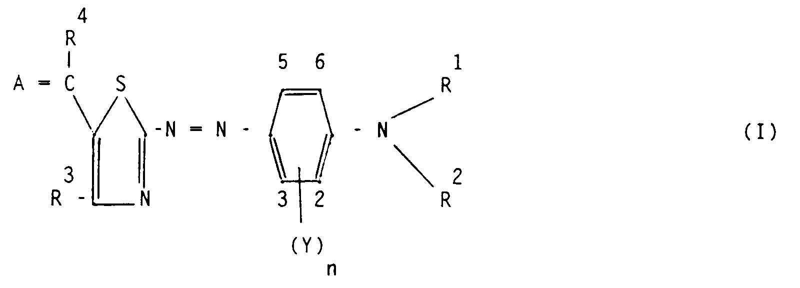 wherein
A represents O, N-R⁵, CR⁶R⁷;
Y represents any substituent, e.g. SH, OH, halogen, NO₂, CN, alkyl, aryl, amino, carbonamido, sulfonamido, acylamino, alkoxy, thioalkoxy;
n represents 0, 1, 2, 3 or 4, the Y substituents being the same or different when n is greater than 1;
each of R¹ to R² (same or different) represent hydrogen, an alkyl group, a cycloalkyl group or an aryl group, which groups may be substituted, or R¹ and R² may be joined together to form a 5- or 6-membered heterocyclic ring system which may be substituted, or each of R¹ and R² independently can be joined to the carbon atom of the aromatic ring at a position ortho to the position of attachment of the anilino nitrogen to form a 5- or 6-membered ring, which ring may be substituted;
R³ represents a substituent, preferentially halogen. OR¹⁰, SR¹⁰;
R⁴ represents hydrogen or an electron withdrawing substituent e.g. CN, halogen, nitro, alkoxycarbonyl, alkylcarbonyl;
R⁵ represents H, CN, NR⁸R⁹, OR⁸, OCOR⁸, OCOOR⁸, OCONR⁸R⁹, OSO₂R⁸, OPO(OR⁸)(OR⁹);
R⁶ and R⁷ (same or different) represent an electron withdrawing group such as CN, CO₂R⁸, CONR⁸R⁹, NO₂, COR⁸, PO(OR⁸)(OR⁹), SO₂R⁸, SO₃R⁸;
R⁸ and R⁹ (same or different) represent hydrogen, substituted or unsubstituted alkyl, substituted or unsubstituted aryl, substituted or unsubstituted cycloalkyl or R⁸ and R⁹ together represent the atoms necessary for completing a heterocyclic nucleus or substituted heterocyclic nucleus;
R¹⁰ represents hydrogen, substituted or unsubstituted alkyl, substituted or unsubstituted cycloalkyl, substituted or unsubstituted aryl.

Preferably R¹ and R² represent an alkyl group (e.g. butyl, ethyl, hexyl), R³ represents halogen (e.g. chlorine) or alkoxy (e.g. methoxy), R⁴ represents hydrogen or cyano, A represents O or CR⁶R⁷ with R⁶ representing CN and R⁷ representing alkoxycarbonyl or amido, n represents 0 or 1 with Y representing alkyl or alkoxy or halogen or alkylsulfonamino or alkylcarbonylamino or arylsulfonylamino generally in the 3-position.

Dyes corresponding to formula (I) generally have a blue to cyan hue and can be prepared according to the methods described in US 4395544, US 4505857, EP 442360, EP 201896 and EP 578870 filed on the same date as the present application.

Examples of suitable thiazolylazoaniline dyes according to the general formula (I) are listed in table 1 below together with their wavelength of maximum absorption (λₘₐₓ) and extinction coefficient (ε), both measured in methanol.

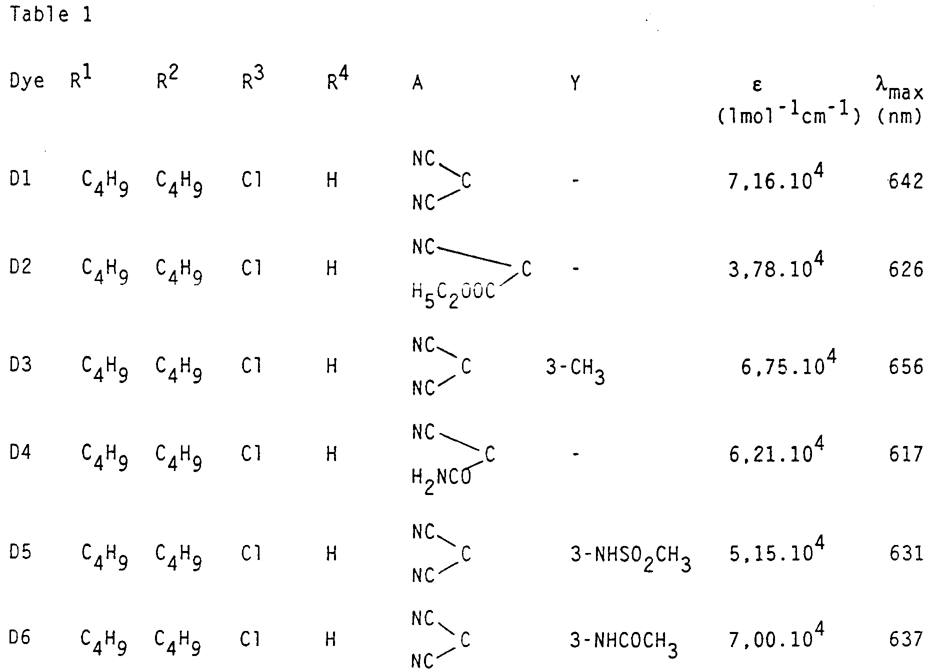

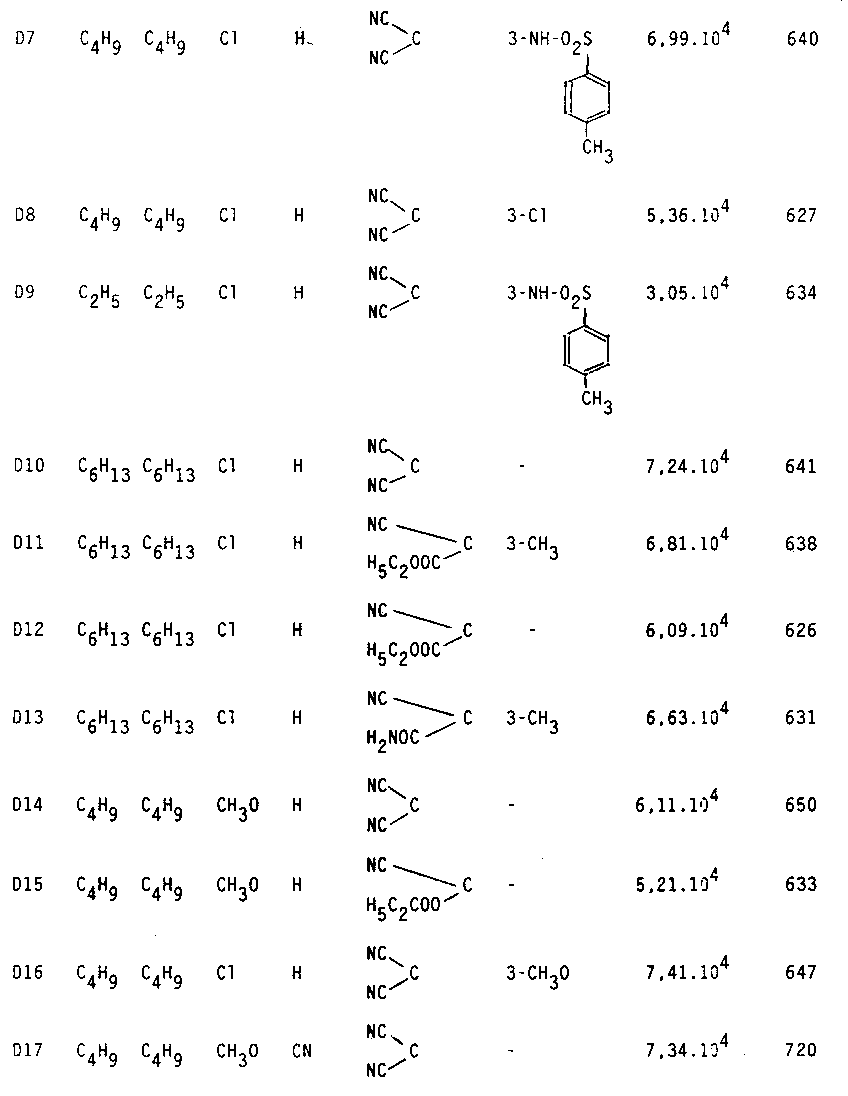

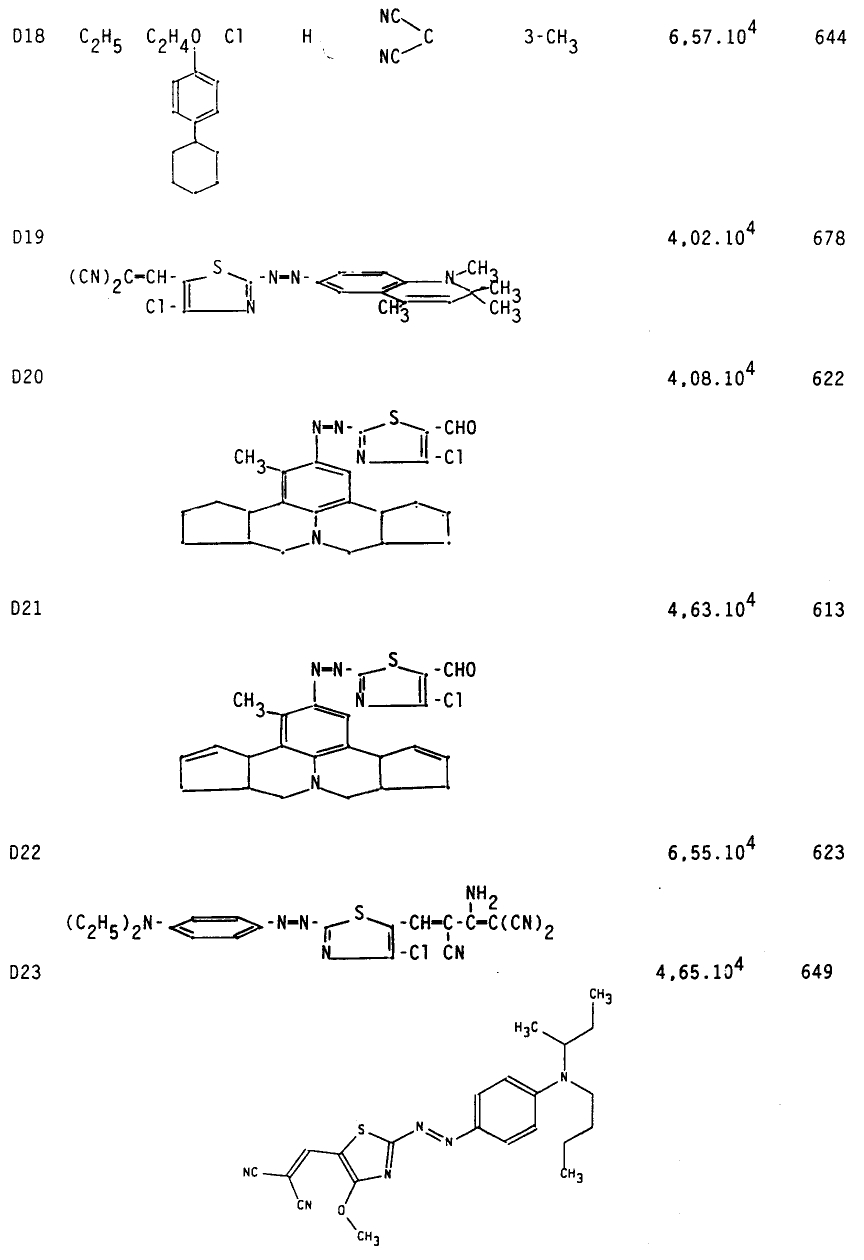

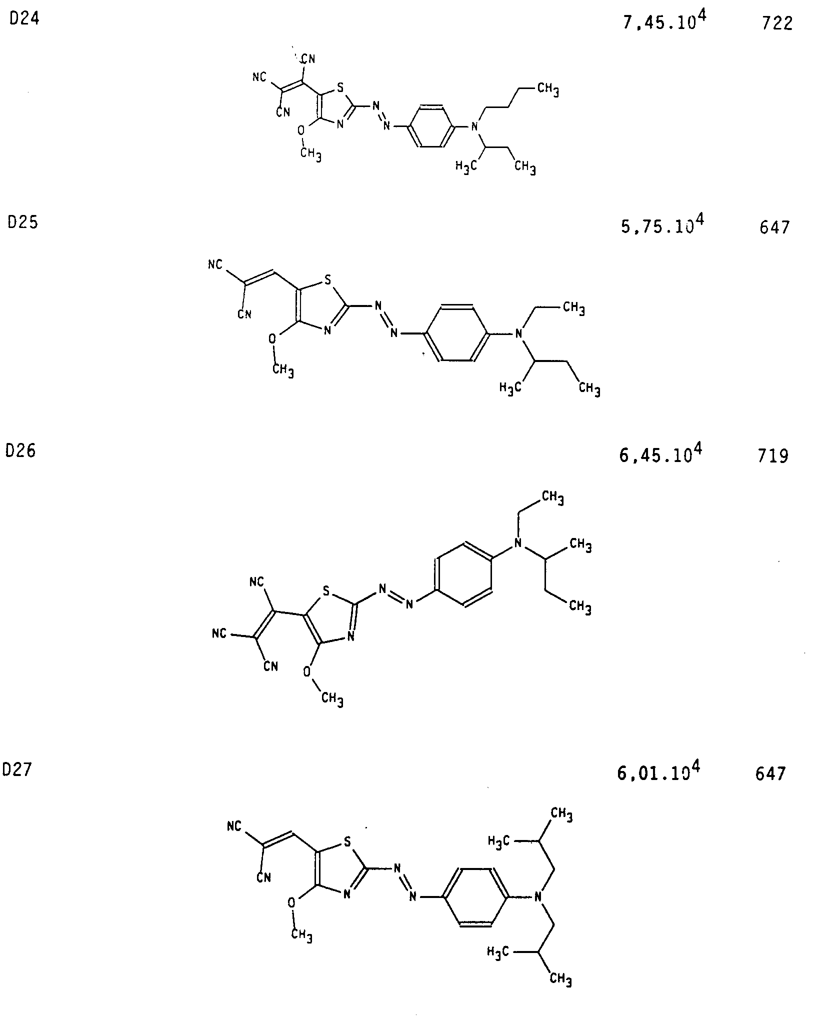

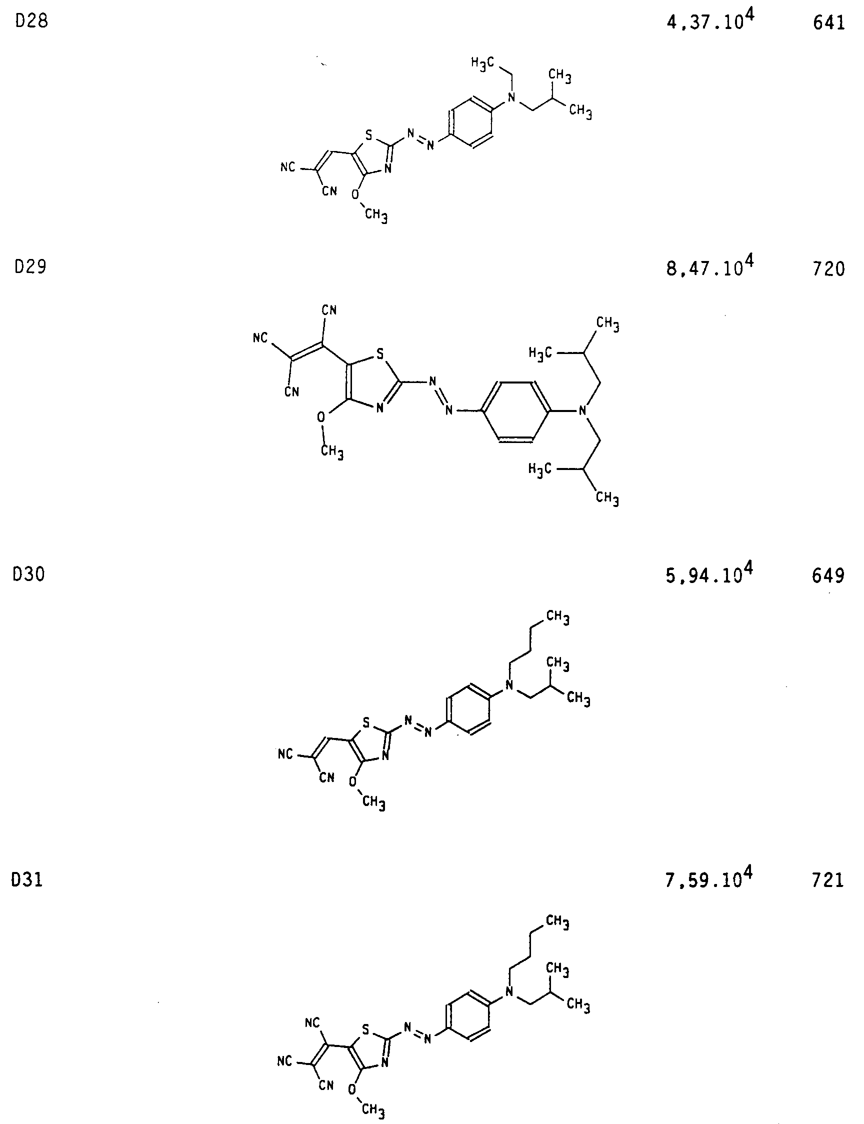

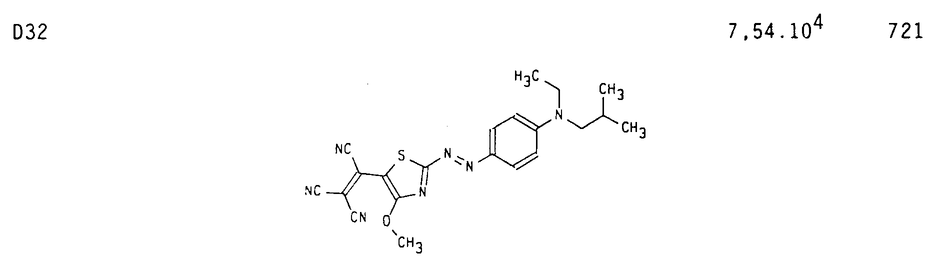

In a particular embodiment of the present invention the dyes according to the formula (I) are used in admixture with cyan indoaniline dyes corresponding to the following general formula (II): 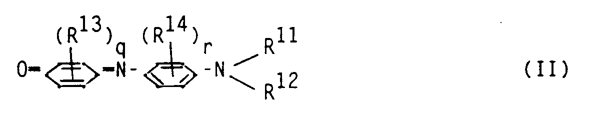 wherein :
R¹¹ and R¹² (same or different) represent hydrogen, an alkyl group, a cycloalkyl group, an aryl group, an allyl group or an alkenyl group, which groups may be substituted, or R¹¹ and R¹² together with the nitrogen to which they are attached form the necessary atoms to close a 5- or 6-membered heterocyclic ring, which ring may be substituted, or R¹¹ and/or R¹² together with the nitrogen to which they are attached and either or both carbon atoms of the phenyl ring ortho to said nitrogen atom form a 5- or 6-membered heterocyclic ring, which ring may be substituted;
R¹³ represents halogen, hydroxy, cyano, an alkyl group, a cycloalkyl group, an aryl group, an alkoxy group, an aryloxy group, an alkylthio group, an arylthio group, an amino group, a di(alkyl or aryl)amino group, an alkylcarbonylamino group, an arylcarbonylamino group, an arylsulfonylamino group, an alkoxycarbonylamino group, an aryloxycarbonylamino group, an alkylthiocarbonylamino group, an arylthiocarbonylamino group, an alkylphosphoramidate group, an arylphosphoramidate group, an alkylphosphonamidate group, an arylphosphonamidate group, an alkylaminocarbonyl group or an arylaminocarbonyl group, which groups may be substituted, or R¹³ represents the necessary atoms to close an alicyclic or aromatic or heterocyclic ring (which rings may be substituted) fused-on the phenylene ring;
q represents 0, 1, 2, 3 or 4, the R¹³ substituents may be the same or different when q is greater than 1;
R¹⁴ can have any of the significances given to R¹³ or can represent the necessary atoms to close an alicyclic or aromatic or heterocyclic ring (which ring may be substituted) fused-on the phenyl ring;
r represents 0, 1, 2, 3 or 4, the R¹⁴ substitutents may be the same or different when r is greater than 1.

Preferably R¹¹ and R¹² both represent alkyl (e.g. ethyl), q represents 1 or 3, R¹³ represents alkylcarbonylamino (which may be substituted) generally in ortho position to the oxygen and/or R¹³ represents the necessary atoms to close an aromatic ring fused-on the phenylene ring, r represents 0 or 1 and R¹⁴ represents alkyl (e.g. methyl) generally in meta position to the anilino nitrogen.

Examples of suitable indoaniline dyes corresponding to the general formula (II) are listed in table 2 below.

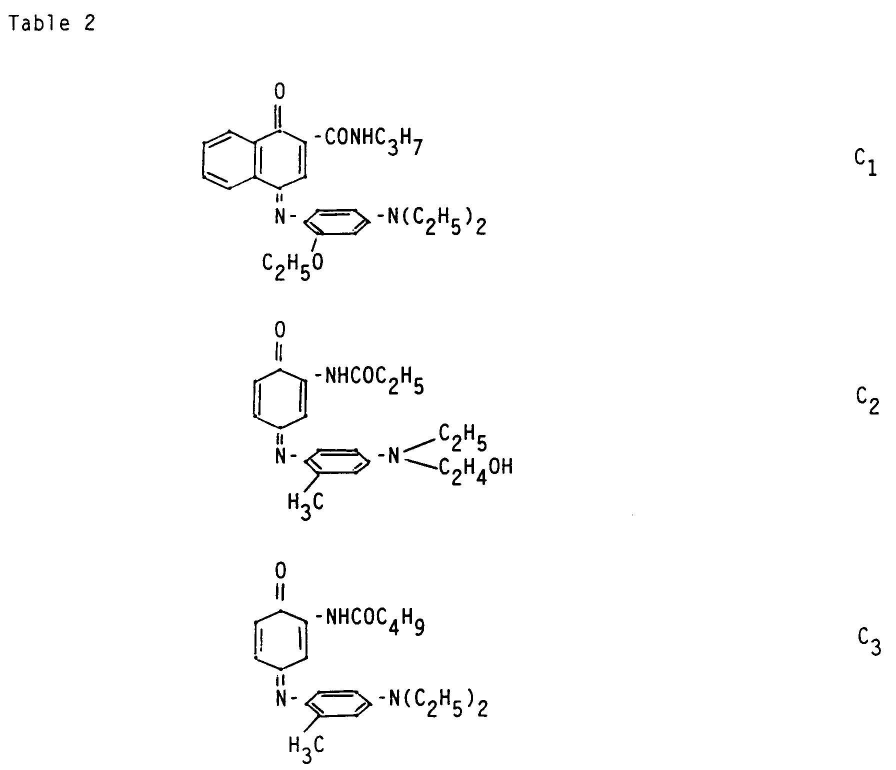

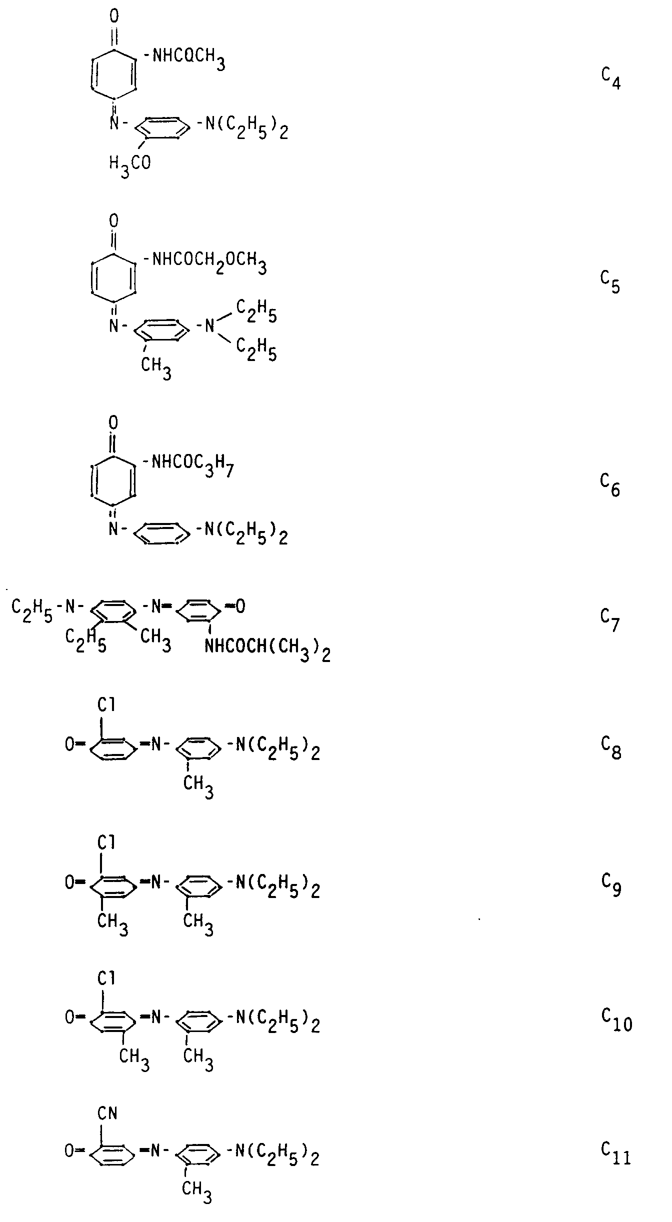

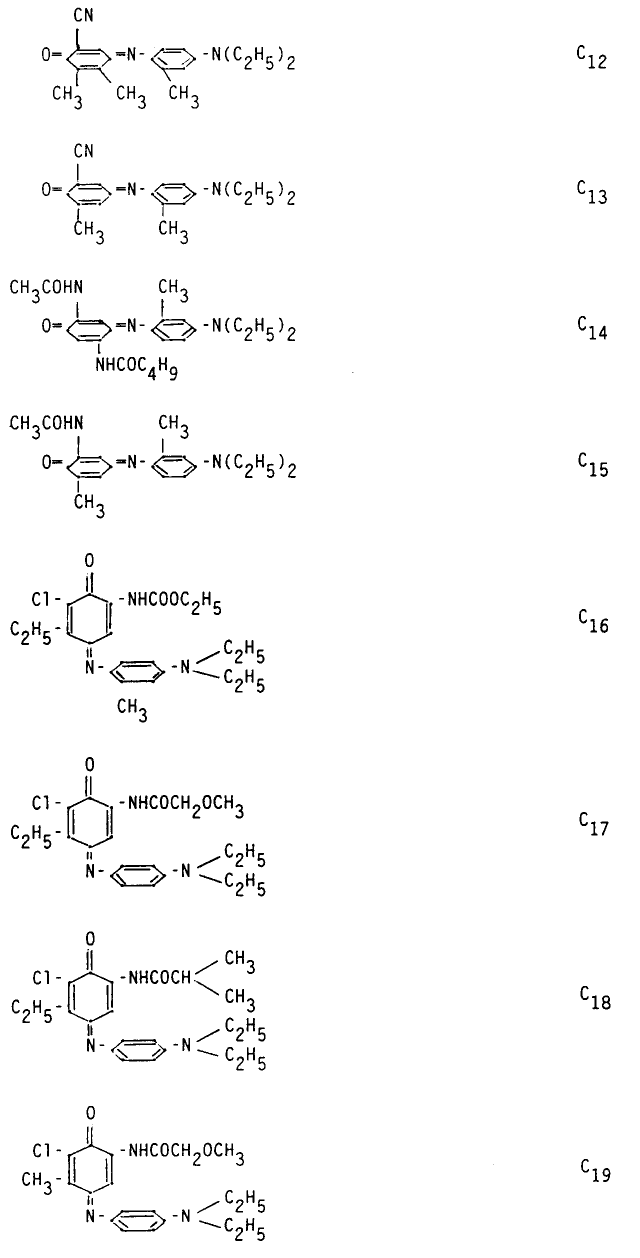

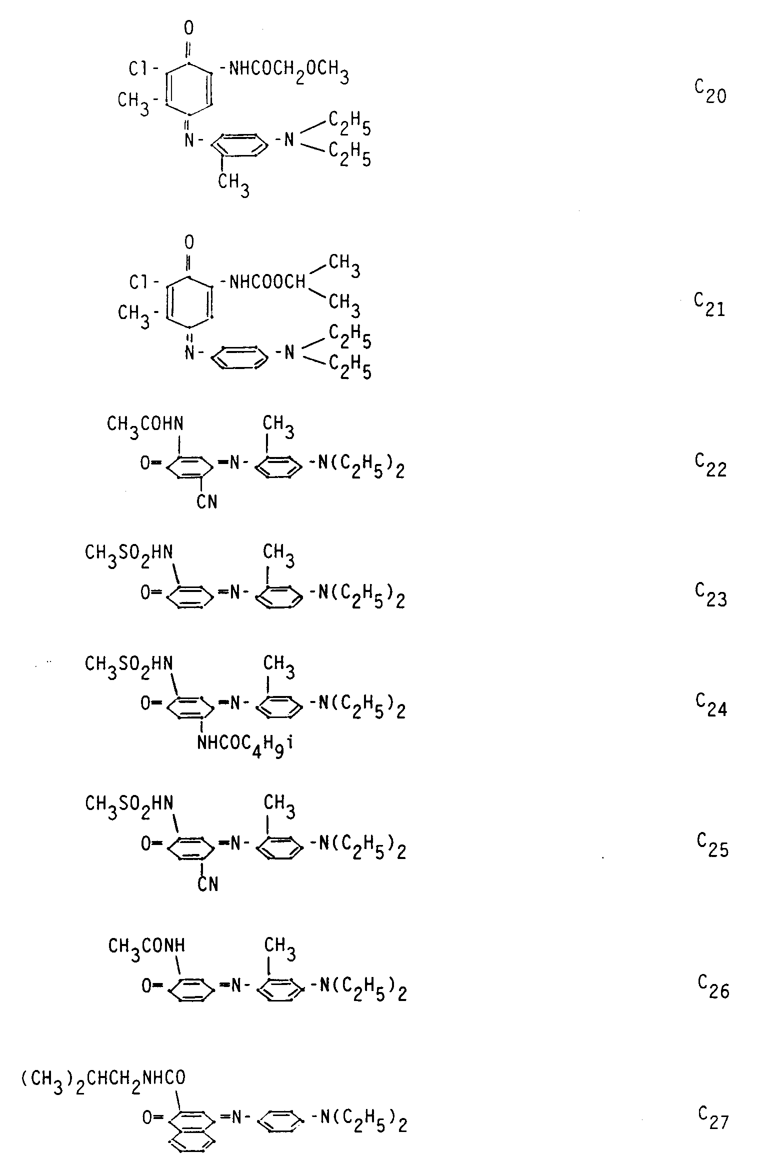

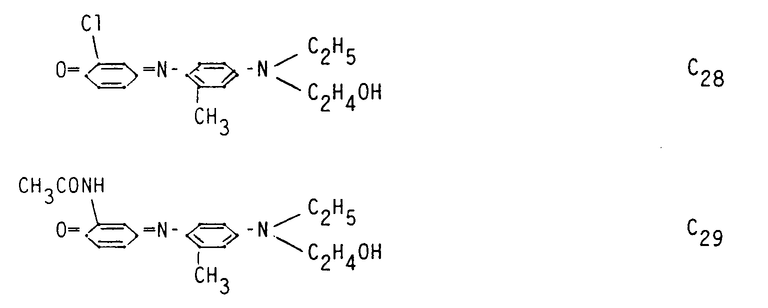

In table 3 are listed absorption maxima (λₘₐₓ) and extinction coefficients (ε) of some of the cyan dyes listed in table 2, measured in methanol.

**Table 3**

| dye | λₘₐₓ (nm) | ε (l mol⁻¹ cm⁻¹) |
|---|---|---|
| C5 | 654 | 28469 |
| C8 | 670 | 38297 |
| C18 | 655 | 27715 |
| C22 | 707 | 31100 |
| C27 | 674 | 29869 |
| C26 | 651 | 26200 |

According to another embodiment of the present invention the dyes according to formula (I) are used in admixture with other cyan azomethine dyes according to general formula (III) 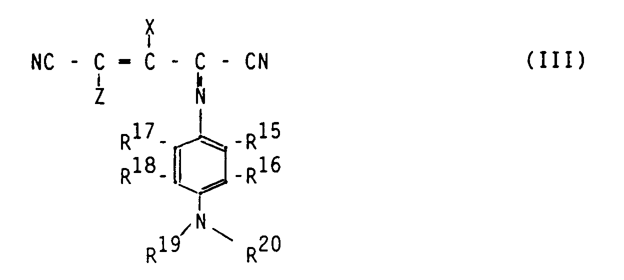 wherein:
X represents OR²¹ or NR²²R²³ or CN;
Z represents CN, COOR²⁴ or CONR²⁵R²⁶;
R¹⁵, R¹⁶, R¹⁷ and R¹⁸ each independently represent hydrogen, substituted or unsubstituted alkyl, substituted or unsubstituted cycloalkyl, substituted or unsubstituted aryl, substituted or unsubstituted alkoxy, substituted or unsubstituted aryloxy, substituted or unsubstituted carbonamido, substituted or unsubstituted sulfamido, hydroxy, halogen, NH-SO₂R²⁷, NH-COR²⁷, OSO₂R²⁷, OCOR²⁷, or R¹⁵ and R¹⁶ together and/or R¹⁷ and R¹⁸ together represent the necessary atoms to close (a) substituted or unsubstituted ring(s) fused-on the benzene ring or R¹⁶ and/or R¹⁸ together with R²⁰ and/or R¹⁹ represent the necessary atoms to close a substituted or unsubstituted heterocyclic ring fused-on the benzene ring;
R¹⁹ and R²⁰ each independently represent hydrogen, substituted or unsubstituted alkyl, substituted or unsubstituted cycloalkyl, substituted or unsubstituted aryl, a substituted or unsubstituted heterocyclic group or R¹⁹ and R²⁰ together represent the necessary atoms to close a substituted or unsubstituted heterocyclic ring or R²⁰ and/or R¹⁹ together with R¹⁶ and/or R¹⁸ represent the necessary atoms to close a substituted or unsubstituted heterocyclic ring fused-on the benzene ring;
R²¹ represents hydrogen, substituted or unsubstituted alkyl, substituted or unsubstituted cycloalkyl, substituted or unsubstituted aryl, SO₂R²⁷, COR²⁷, CSR²⁷, POR²⁷R²⁸;
R²² and R²³ each independently represent hydrogen, substituted or unsubstituted alkyl, substituted or unsubstituted cycloalkyl, substituted or unsubstituted aryl, substituted or unsubstituted amino, SO₂R²⁷, COR²⁷, CSR²⁷, POR²⁷R²⁸, or R²² and R²³ together represent the necessary atoms to close a substituted or unsubstituted heterocyclic ring, including a heterocyclic ring with an aliphatic or aromatic ring fused-on;
R²⁴, R²⁵ and R²⁶ each independently represent hydrogen, substituted or unsubstituted alkyl, substituted or unsubstituted cycloalkyl, substituted or unsubstituted aryl, or R²⁵ and R²⁶ together represent the necessary atoms to close a substituted or unsubstituted heterocyclic ring;
R²⁷ and R²⁸ each independently represent substituted or unsubstituted alkyl, substituted or unsubstituted cycloalkyl, substituted or unsubstituted alkenyl, substituted or unsubstituted aralkyl, substituted or unsubstituted aryl, substituted or unsubstituted alkoxy, substituted or unsubstituted aryloxy, substituted or unsubstituted alkylthio, substituted or unsubstituted arylthio, substituted or unsubstituted amino, a substituted or unsubstituted heterocyclic group or R²⁷ and R²⁸ together represent the necessary atoms to close a 5- or 6-membered ring.

Preferably X represents NR²²R²³, Z represents CN, R¹⁹ and R²⁰ both represent alkyl (e.g. ethyl), R¹⁶, R¹⁷ and R¹⁸ represent hydrogen, R¹⁵ represents alkylcarbonylamino.

Table 1 of US 5026677 gives a list of color dyes according to general formula III.

Examples of suitable dyes according to formula III are

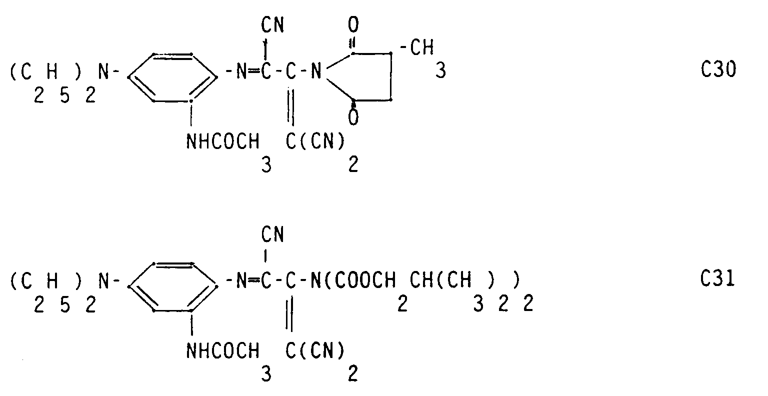

A preferred combination of cyan dyes according to the present invention is D14 and C30, D14 and C31, D14 and C5, D23 and C30, D23 and C31 or D23 and C5. Preferably the weight ratio of dyes "C" to dyes "D" is 9:3.

The compounding ratio of the cyan thiazolylazoaniline dyes according to general formula (I) with the cyan indoaniline dyes of general formula (II) or/and with the cyan azomethine dyes of general formula (III) in the cyan dye mixture is properly from 5 to 60 % by weight for the cyan dyes of formula (I), the balance being completed with dyes of formula II or III, or with mixtures of them in all proportions.

Yellow dyes for use together with the dyes of formula (I), (II) and/or (III) for obtaining green colored image areas include the yellow dyes described in EP 400706, EP 432829, EP 432313, EP 432314, US 4816435, US 5043316 and US 4833123. These yellow dyes are then contained in another area (a yellow dye area) of the present dye-donor element.

Examples of suitable yellow dyes are

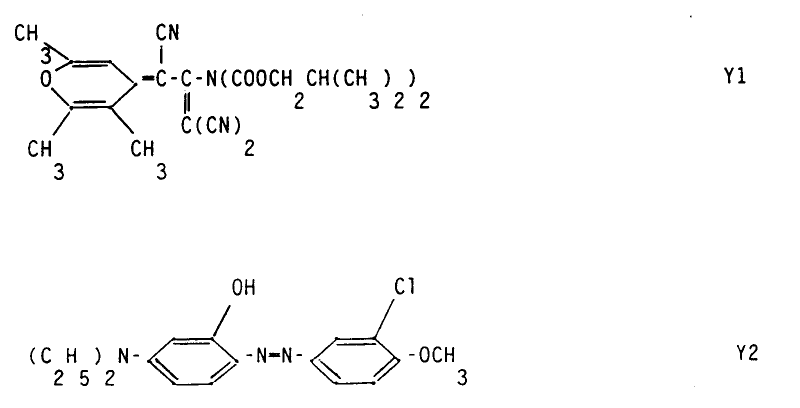

Other yellow dyes especially well suited for use in three color materials are yellow dyes of the following general formula (IV) : 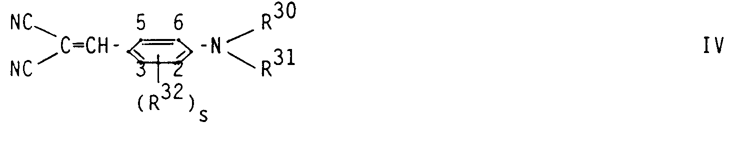 wherein :
R³⁰ and R³¹ (same or different) represent hydrogen, an alkyl group, a cycloalkyl group or an aryl group, which groups may be substituted, or R³⁰ and R³¹ may be joined together to form a 5- or 6-membered heterocyclic ring system, which ring may be substituted, or each of R³⁰ and R³¹ can be joined to the carbon atom of the aromatic ring at a position ortho to the position of attachment of the anilino nitrogen to form a 5- or 6-membered ring, which ring may be substituted;
R³² represents a substituent, e.g. alkyl, CN, alkoxy, thioalkoxy, halogen, NO₂, acylamino;
s represents 0, 1, 2, 3 or 4, the R³² substituents may be the same or different when s is greater than 1.

Examples of yellow dyes according to general formula (IV) are listed in table 4 below, Y3 being particularly preferred.

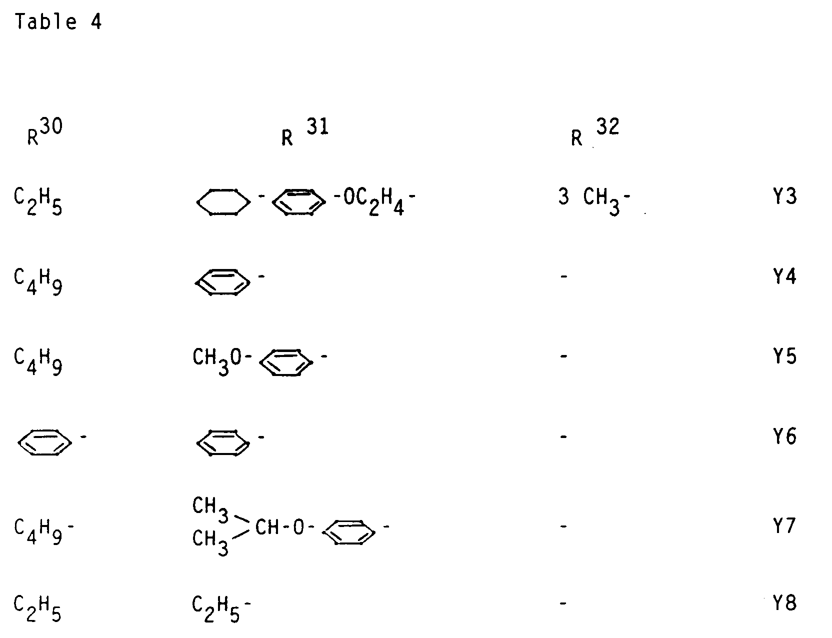

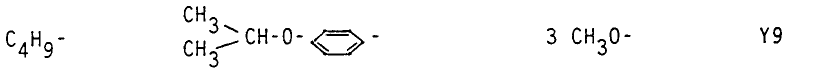

Magenta dyes for use together with the cyan dyes of the present invention in three color materials are described in US 4159192, EP 279467, EP 227095 and EP 441396.

Examples of suitable magenta dyes are

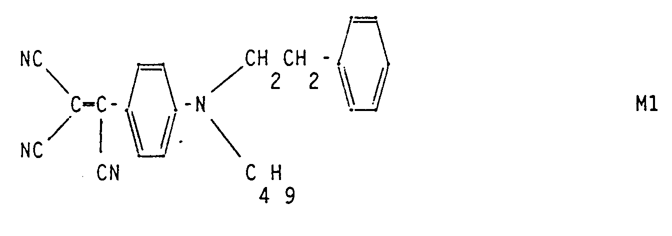

Instead of being used as a dye mixture in a cyan colored dye-donor element the present mixture of cyan dyes can also be used in a black colored dye-donor element in admixture with magenta dyes and yellow dyes. Suitable dyes to be used in such a black-colored dye-donor element are described in EP 453020 and in EP 578870.

The dye layer of the dye-donor element of the present invention is formed preferably by adding the dyes, the polymeric binder medium, and other optional components to a suitable solvent or solvent mixture, dissolving or dispersing the ingredients to form a coating composition that is applied to a support, which may have been provided first with an adhesive or subbing layer, and dried.

The dye layer thus formed has a thickness of about 0.2 to 5.0 µm, preferably 0.4 to 2.0 µm, and the amount ratio of dye to binder is between 9:1 and 1:3 by weight, preferably between 2:1 and 1:2 by weight.

As polymeric binder the following can be used : cellulose derivatives, such as ethyl cellulose, hydroxyethyl cellulose, ethylhydroxy cellulose, ethylhydroxyethyl cellulose, hydroxypropyl cellulose, methyl cellulose, nitrocellulose, cellulose acetate formate, cellulose acetate hydrogen phthalate, cellulose acetate, cellulose acetate propionate, cellulose acetate butyrate, cellulose acetate pentanoate, cellulose acetate benzoate, cellulose triacetate; vinyl-type resins and derivatives, such as polyvinyl alcohol, polyvinyl acetate, polyvinyl butyral, copolyvinyl butyral-vinyl acetal-vinyl alcohol, polyvinyl pyrrolidone, polyvinyl acetoacetal, polyacrylamide; polymers and copolymers derived from acrylates and acrylate derivatives, such as polyacrylic acid, polymethyl methacrylate and styrene-acrylate copolymers; polyester resins; polycarbonates; copolystyrene-acrylonitrile; polysulfones; polyphenylene oxide; organosilicones, such as polysiloxanes; epoxy resins and natural resins, such as gum arabic. Preferably cellulose acetate butyrate or copolystyrene-acrylonitrile is used as binder for the dye layer of the present invention.

The coating layer may also contain other additives, such as curing agents, preservatives, organic or inorganic fine particles, dispersing agents, antistatic agents, defoaming agents, viscosity controlling agents, etc., these and other ingredients being described more fully in EP 133011, EP 133012, EP 111004 and EP 279467.

Especially preferred organic fine particles for use in the dye layer are polyethylene, polypropylene, or amide wax particles.

Any material can be used as the support for the dye-donor element provided it is dimensionally stable and capable of withstanding the temperatures involved, up to 400°C over a period of up to 20 msec, and is yet thin enough to transmit heat applied on one side through to the dye on the other side to effect transfer to the receiver sheet within such short periods, typically from 1 to 10 msec. Such materials include sheets or films of polyester such as polyethylene terephthalate, polyamide, polyacrylate, polycarbonate, cellulose ester, fluorinated polymer, polyether, polyacetal, polyolefin, polyimide, glassine paper and condenser paper. Preference is given to a support comprising polyethylene terephthalate. In general, the support has a thickness of 2 to 30 µm.

The support may also be coated with an adhesive or subbing layer, if desired. A suitable subbing layer for the dye layer contains a copolyester of terephthalic acid, isophthalic acid, ethylene glycol and neopentyl glycol and optionally 1,2-dihydroxybenzene.

The dye layer of the dye-donor element may be coated on the support or printed thereon by a printing technique such as a gravure process.

A dye-barrier layer comprising a hydrophilic polymer may also be employed in the dye-donor element between its support and the dye layer to improve the dye transfer densities by preventing wrong-way transfer of dye towards the support. The dye barrier layer may contain any hydrophilic material which is useful for the intended purpose. In general, good results have been obtained with gelatin, polyacryl amide, polyisopropyl acrylamide, butyl methacrylate grafted gelatin, ethyl methacrylate grafted gelatin, ethyl acrylate grafted gelatin, cellulose monoacetate, methyl cellulose, polyvinyl alcohol, polyethylene imine, polyacrylic acid, a mixture of polyvinyl alcohol and polyvinyl acetate, a mixture of polyvinyl alcohol and polyacrylic acid or a mixture of cellulose monoacetate and polyacrylic acid. Suitable dye barrier layers have been described in e.g. EP 227091 and EP 228065. Certain hydrophilic polymers, for example those described in EP 227091, also have an adequate adhesion to the support and the dye layer, thus eliminating the need for a separate adhesive or subbing layer. These particular hydrophilic polymers used in a single layer in the donor element thus perform a dual function, hence are referred to as dye-barrier/subbing layers.

Preferably the reverse side of the dye-donor element is coated with a slipping layer to prevent the printing head from sticking to the dye-donor element. Such a slipping layer would comprise a lubricating material such as a surface active agent, a liquid lubricant, a solid lubricant or mixtures thereof, with or without a polymeric binder. The surface active agents may be any agents known in the art such as carboxylates, sulfonates, phosphates, aliphatic amine salts, aliphatic quaternary ammonium salts, polyoxyethylene alkyl ethers, polyethylene glycol fatty acid esters, fluoroalkyl C₂-C₂₀ aliphatic acids. Examples of liquid lubricants include silicone oils, synthetic oils, saturated hydrocarbons and glycols. Examples of solid lubricants include various higher alcohols such as stearyl alcohol, fatty acids and fatty acid esters. Suitable slipping layers are described in e.g. EP 138483, EP 227090, US 4567113, US 4572860, US 4717711.

Preferably the reverse side of the support is coated with the following subsequent layers in order to prevent sticking from the dye-donor element to the thermal head: a subbing layer, a heat-resistant layer and a toplayer. Suitable subbing layers can be choosen from the classes of polyester resins, polyurethane resins, polyester urethane resins, modified dextrans, modified cellulose, and copolymers comprising recurring units such as i.a. vinylchloride, vinylidenechloride, vinylacetate, acrylonitrile, methacrylate, acrylate, butadiene and styrene (e.g. poly(vinylidenechloride-co-acrylonitrile)). Especially preferred are polyester subbing layers such as described in European patent application 564010. Suitable heat-resistant layers are described in European patent applications nos EP 527520 (polycarbonates) and 573086 (polyethers). EP-A 0 564 010, EP-A 0 527 520 and EP-A 0 573 086 constitute prior art according to Article 54(3)(4)EPC for the designated contracting states BE, FR, DE, GB and NL. The separate toplayer comprises at least one lubricant e.g. a polyether-polysiloxane copolymer.

The support for the receiver sheet that is used with the dye-donor element may be a transparant film of e.g. polyethylene terephthalate, a polyether sulfone, a polyimide, a cellulose ester or a polyvinyl alcohol-co-acetal. The support may also be a reflective one such as baryta-coated paper, polyethylene-coated paper or white polyester i.e. white-pigmented polyester. Blue-colored polyethylene terephthalate film can also be used as support.

To avoid poor adsorption of the transferred dye to the support of the receiver sheet this support must be coated with a special surface, a dye-image-receiving layer, into which the dye can diffuse more readily. The dye-imaging-receiving layer may comprise, for example, a polycarbonate, a polyurethane, a polyester, a polyamide, polyvinyl chloride, polystyrene-co-acrylonitrile, polycaprolactone or mixtures thereof. The dye-image receiving layer may also comprise a heat-cured product of poly(vinylchloride-co-vinylacetate-co-vinylalcohol) and polyisocyanate. Suitable dye-receiving layers have been described in e.g. EP 133011, EP 133012, EP 144247, EP 227094, EP 228066.

In order to improve the light resistance and other stabilities of recorded images, UV absorbers, singlet oxygen quenchers such as HALS-compounds (Hindered Amine Light Stabilizers) and/or antioxidants may be incorporated into the receiving layer.

The dye layer of the dye-donor element or the dye-image-receiving layer of the receiver sheet may also contain a releasing agent that aids in separating the dye-donor element from the dye-receiving element after transfer. The releasing agents can also be applied in a separate layer on at least part of the dye layer or of the receiving layer. For the releasing agent solid waxes, fluorine- or phosphate-containing surfactants and silicone oils are used, Suitable releasing agents are described in e.g. EP 133012, JP 85/19138, EP 227092.

The dye-donor elements according to the invention are used to form a dye transfer image. Such a process comprises placing the dye layer of the donor element in face-to-face relation with the dye-receiving layer of the receiver sheet and imagewise heating from the back of the donor element. The transfer of the dye is accomplished by heating for about several milliseconds at a temperature of 400°C.

When the process is performed for but one single color, a monochrome dye transfer image is obtained. A multicolor image can be obtained by using a donor element containing three or more primary color dyes and sequentially performing the process steps described above for each color. The above sandwich of donor element and receiver sheet is formed on three occasions during the time when heat is applied by the thermal printing head. After the first dye has been transferred, the elements are peeled apart. A second dye-donor element (or another area of the donor element with a different dye area) is then brought in register with the dye-receiving element and the process repeated. The third color and optionally further colors are obtained in the same manner.

In addition to thermal heads, laser light, infrared flash or heated pens can be used as the heat source for supplying heat energy. Thermal printing heads that can be used to transfer dye from the dye-donor elements of the present invention to a receiver sheet are commercially available. In case laser light is used, the dye layer or another layer of the dye element has to contain a compound that absorbs the light emitted by the laser and converts it into heat, e.g. carbon black.

Alternatively, the support of the dye-donor element may be an electrically resistive ribbon consisting of, for example, a multi-layer structure of a carbon loaded polycarbonate coated with a thin aluminum film. Current is injected into the resistive ribbon by electrically adressing a print head electrode resulting in highly localized heating of the ribbon beneath the relevant electrode. The fact that in this case the heat is generated directly in the resistive ribbon and that it is thus the ribbon that gets hot leads to an inherent advantage in printing speed using the resistive ribbon/electrode head technology compared to the thermal head technology where the various elements of the thermal head get hot and must cool down before the head can move to the next printing position.

The following examples are provided to illustrate the invention in more detail without limiting, however, the scope thereof.

### EXAMPLE 1: Lightfastness of cyan dye mixtures

Receiver sheets were prepared as follows :

A 175 µm thick polyethylene terephthalate film was coated from methyl ethyl ketone with a dye image receiving layer which contains 3,6 g/m² poly(vinylchloride-co-vinylacetate-co-vinylalcohol) (Vinylite VAGD supplied by Union Carbide), 0.336 g/m² diisocyanate (Desmodur VL supplied by Bayer AG) and 0.2 g/m² hydroxy modified polydimethylsiloxane (Tegomer HSI 2111 supplied by Goldschmidt).

Dye-donor elements were prepared as follows :

A solution comprising the dye(s) as given in table 5 (amounts are given in wt %) and 10 wt% of poly(styrene-co-acrylonitrile) (Luran 3885, BASF, Germany) as binder in methyl ethyl ketone as solvent was prepared. From this solution a dye layer having a wet thickness of 10 µm was coated on a 6 µm thick polyethylene terephthalate film support provided with a conventional subbing layer. The resulting dye layer was dried by evaporation of the solvent.

The opposite side of the film support was coated with a subbing layer of a copolyester comprising ethylene glycol, adipic acid, neopentyl glycol, terephthalic acid, isophthalic acid and glycerol. On top of this subbing layer, a heat-resistant layer was casted from methylethylketone, containing 0.5 g/m² of a polycarbonate having the following structure : 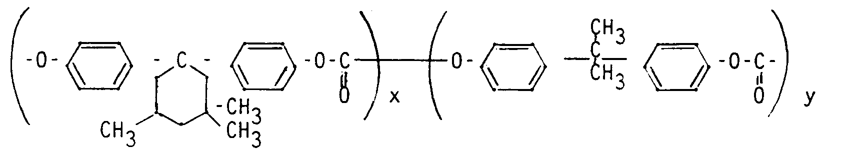
wherein x = 55 mol% and y = 45 mol%.

On top of said polycarbonate, a topcoat layer of polyether modified polydimethylsiloxane (Tegoglide 410, Goldschmidt) was applied from isopropanol.

The dye-donor element was printed in combination with the receiving sheet in a Mitsubishi colour video printer CP100E.

The receiver sheet was separated from the dye-donor element and the color density of the recorded image was measured by means of a Macbeth TR 924 densitometer behind a red filter in Status A mode.

This experiment was repeated for each of the dye mixtures identified in table 5 below.

Thereafter, the receiver sheet was subjected to irradiation by a Xenon lamp of 150 klux for 16 hours, the densities were measured again and the density loss (in %) was calculated and given in table 5.

**Table 5**

| Cyan III | % | Cyan II | % | Cyan I | % | Density loss 16 h Xe 150 | Remarks |
|---|---|---|---|---|---|---|---|
| | | C5 | 12 | - | | 25 | comparison |
| | | C5 | 9 | D14 | 3 | 20 | invention |
| | | C5 | 9 | D4 | 3 | 16 | invention |
| | | C5 | 9 | D6 | 3 | 20 | invention |
| | | C5 | 9 | D5 | 3 | 19 | invention |
| | | C5 | 9 | D2 | 3 | 16 | invention |
| | | C5 | 9 | D1 | 3 | 16 | invention |
| | | C5 | 9 | D3 | 3 | 19 | invention |
| | | C27 | 10 | - | | 6 | comparison |
| | | C27 | 7 | D1 | 3 | 4 | invention |
| C30 | 6 | C5 | 6 | - | | 15 | comparison |
| C30 | 6 | C5 | 3 | D14 | 3 | 9 | invention |
| C30 | 3 | C5 | 6 | D14 | 3 | 4 | invention |
| C31 | 12 | - | | - | | 5 | comparison |
| C31 | 9 | - | | D14 | 3 | 1 | invention |

From the results it is clear that the light stability of the cyan prints according to the invention is increased.

### EXAMPLE 2 : Lightfastness in the green colored image area

Receiver sheets were prepared as described above in example 1.

Cyaan dye-donor elements were prepared as described in example 1 containing cyan dyes as listed in table 6 below.

Yellow dye-donor elements were prepared in an analoguous way as described in example 1 containing yellow dyes as listed in table 6 below.

The cyan dye-donor element was printed in combination with the receiver sheet and subsequently after separation of donor and receiver the yellow dye-donor element was printed in combination with the same receiver sheet in register so as to obtain a green colored image.

The receiver sheet was separated from the yellow dye-donor element and the color density of the recorded green image was measured by means of a Macbeth TR 924 densitometer behind red and blue filter.

Thereafter the receiver sheet was subjection to irradiation by a Xenon lamp of 150 klux for 16 hours. the densities were measured again and subsequently the density loss was calculated.

The results are given in table 6.

**Table 6**

| Cyan III | % | Cyan II | % | Cyan I | % | Yellow | % | Density loss 16 h Xe 150 | | Remarks |
|---|---|---|---|---|---|---|---|---|---|---|
| | | | | | | | | R | B | |
| | | C5 | 12 | - | | Y3 | 12 | 53 | 15 | comparison |
| | | C5 | 9 | D14 | 3 | Y3 | 12 | 43 | 11 | invention |
| | | C5 | 9 | D4 | 3 | Y3 | 12 | 35 | 7 | invention |
| | | C5 | 9 | D5 | 3 | Y3 | 12 | 44 | 8 | invention |
| | | C5 | 9 | D2 | 3 | Y3 | 12 | 43 | 9 | invention |
| | | C5 | 9 | D1 | 3 | Y3 | 12 | 33 | 6 | invention |
| | | C5 | 9 | D3 | 3 | Y3 | 12 | 50 | 10 | invention |
| | | C5 | 12 | - | | Y1 | 10 | 58 | 33 | comparison |
| | | C5 | 9 | D1 | 3 | Y1 | 10 | 50 | 16 | invention |
| C30 | 12 | - | | - | | Y3 | 12 | 25 | 4 | comparison |
| C30 | 9 | - | | D14 | 3 | Y3 | 12 | 19 | 0 | invention |
| C30 | 6 | C5 | 6 | - | | Y3 | 12 | 40 | 9 | comparison |
| C30 | 6 | C5 | 3 | D14 | 3 | Y3 | 12 | 32 | 6 | invention |
| C30 | 3 | C5 | 6 | D14 | 3 | Y3 | 12 | 34 | 6 | invention |
| C31 | 12 | - | | - | | Y3 | 12 | 65 | 16 | comparison |
| C31 | 9 | - | | D2 | 3 | Y3 | 12 | 50 | 9 | invention |
| C31 | 9 | - | | D14 | 3 | Y3 | 12 | 24 | 4 | invention |
| C31 | 12 | - | | - | | Y2 | 12 | 74 | 91 | comparison |
| C31 | 9 | - | | D14 | 3 | Y2 | 12 | 43 | 77 | invention |
| | | C5 | 9.5 | D17 | 2.5 | Y3 | 12 | 49 | 9 | invention |
| C31 | 9,5 | - | | D17 | 2.5 | Y3 | 12 | 20 | 4 | invention |

It is clear that the catalytic fading effects in the green dye image area are decreased by using a cyan dye mixture according to the present invention.

### EXAMPLE 3 : Lightfastness in black colored dye image areas

Receiver sheets were prepared as described above in example 1.

Cyaan dye-donor elements were prepared as described in example 1 containing cyan dyes as listed in table 7 below.

Yellow dye-donor elements were prepared in an analoguous way as described in example 1 containing yellow dyes as listed in table 7 below.

Magenta dye-donor elements were prepared in an analoguous way as described in example 1 containing magenta dyes as listed in table 7 below.

The cyan dye-donor element was printed in combination with the receiver sheet and subsequently after separation of donor and receiver the yellow dye-donor element was printed in combination with the same receiver sheet in register and subsequently after separation of donor and receiver the magenta dye-donor element was printed in combination with the same receiver in register so as to obtain a black colored image.

The receiver sheet was separated from the magenta dye-donor element and the color density of the recorded black image was measured by means of a Macbeth TR 924 densitometer behind red, blue, green and visual filter.

Thereafter the receiver sheet was subjection to irradiation by a Xenon lamp of 150 klux for 16 hours, the densities were measured again and subsequently the density loss was calculated.

The results are given in table 7.

**Table 7**

| Cyan | % | Azo cyan I | % | Yellow | % | Magenta | % | Density 16 h Xe | | loss 150 | | Remarks |
|---|---|---|---|---|---|---|---|---|---|---|---|---|
| | | | | | | | | Vis. | R | Gr | B | |
| C5 | 12 | - | | Y3 | 12 | M1 | 10 | 28 | 47 | 16 | 9 | comparison |
| C5 | 9 | D14 | 3 | Y3 | 12 | M1 | 10 | 15 | 29 | 9 | 4 | invention |
| C31 | 12 | - | | Y3 | 12 | M1 | 10 | 60 | 83 | 38 | 30 | comparison |
| C31 | 9 | D14 | 3 | Y3 | 12 | M1 | 10 | 30 | 45 | 18 | 6 | invention |
| C31 | 12 | - | | Y2 | 12 | M1 | 10 | 75 | 94 | 59 | 85 | comparison |
| C31 | 9 | D14 | 3 | Y2 | 12 | M1 | 10 | 40 | 58 | 20 | 59 | invention |

It is clear that also in the black colored image areas the catalytic fading effects are decreased by using mixtures of cyan color dyes according to the invention.

## Claims

1. Dye-donor element comprising a support provided with a dye layer containing a cyan indoaniline dye and/or another cyan azomethine dye, characterized in that said dye layer further contains a cyan thiazolylazoaniline dye corresponding to the following general formula (I) : 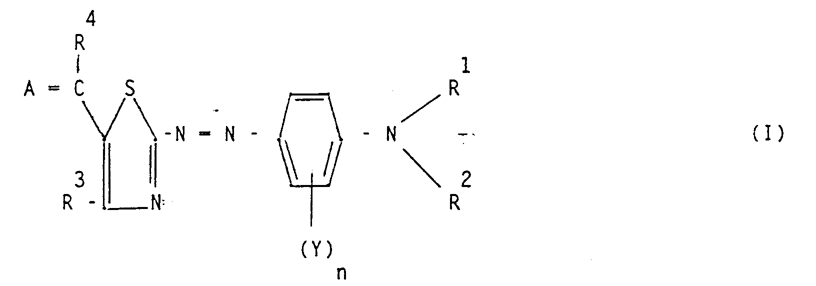 wherein
A represents O, N-R⁵, CR⁶R⁷;
Y represents any substituent;
n represents 0, 1, 2, 3 or 4, the Y substituents being the same or different when n is greater than 1;
each of R¹ to R² (same or different) represent hydrogen, an alkyl group, a cycloalkyl group or an aryl group, which groups may be substituted, or R¹ and R² may be joined together to form a 5- or 6-membered heterocyclic ring system which may be substituted, or each of R¹ and R² independently can be joined to the carbon atom of the aromatic ring at a position ortho to the position of attachment of the anilino nitrogen to form a 5- or 6-membered ring, which ring may be substituted;
R³ represents a substituent;
R⁴ represents hydrogen or an electron withdrawing substituent;
R⁵ represents H, CN, NR⁸R⁹, OR⁸, OCOR⁸, OCOOR⁸, OCONR⁸R⁹, OSO₂R⁸, OPO(OR⁸)(OR⁹);
R⁶ and R⁷ (same or different) represent an electron withdrawing group;
R⁸ and R⁹ (same or different) represent hydrogen, substituted or unsubstituted alkyl, substituted or unsubstituted aryl, substituted or unsubstituted cycloalkyl or R⁸ and R⁹ together represent the atoms necessary for completing a heterocyclic nucleus or substituted heterocyclic nucleus.

2. Dye-donor element according to claim 1, wherein R³ represents halogen, OR¹⁰ or SR¹⁰ with R¹⁰ representing hydrogen, substituted or unsubstituted alkyl, substituted or unsubstituted cycloalkyl, substituted or unsubstituted aryl.

3. Dye-donor element according to claim 2, wherein R¹ and R² both represent an alkyl group, R³ represents chlorine or methoxy, R⁴ represents hydrogen, A represents C(CN)₂ and n represents 0.

4. Dye-donor element according to any one of the preceding claims, wherein said cyan indoaniline dye corresponds to the following general formula (II): 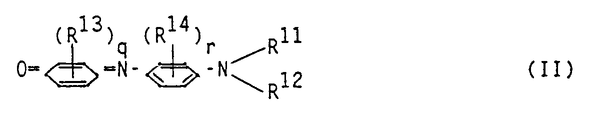 wherein :
R¹¹ and R¹² (same or different) represent hydrogen, an alkyl group, a cycloalkyl group, an aryl group, an allyl group or an alkenyl group, which groups may be substituted, or R¹¹ and R¹² together with the nitrogen to which they are attached form the necessary atoms to close a 5- or 6-membered heterocyclic ring, which ring may be substituted, or R¹¹ and/or R¹² together with the nitrogen to which they are attached and either or both carbon atoms of the phenyl ring ortho to said nitrogen atom form a 5- or 6-membered heterocyclic ring, which ring may be substituted;
R¹³ represents halogen, hydroxy, cyano, an alkyl group, a cycloalkyl group, an aryl group, an alkoxy group, an aryloxy group, an alkylthio group, an arylthio group, an amino group, a di(alkyl or aryl)amino group, an alkylcarbonylamino group, an arylcarbonylamino group, an arylsulfonylamino group, an alkoxycarbonylamino group, an aryloxycarbonylamino group, an alkylthiocarbonylamino group, an arylthiocarbonylamino group, an alkylphosphoramidate group, an arylphosphoramidate group, an alkylphosphonamidate group, an arylphosphonamidate group, an alkylaminocarbonyl group or an arylaminocarbonyl group, which groups may be substituted, or R¹³ represents the necessary atoms to close an alicyclic or aromatic or heterocyclic ring (which rings may be substituted) fused-on the phenylene ring;
q represents 0, 1, 2, 3 or 4, the R¹³ substituents may be the same or different when q is greater than 1;
R¹⁴ can have any of the significances given to R¹³ or can represent the necessary atoms to close an alicyclic or aromatic or heterocyclic ring (which ring may be substituted) fused-on the phenyl ring;
r represents 0, 1, 2, 3 or 4, the R¹⁴ substitutents may be the same or different when r is greater than 1.

5. Dye-donor element according to any one of the preceding claims, wherein said other cyan azomethine dye corresponds to general formula (III) 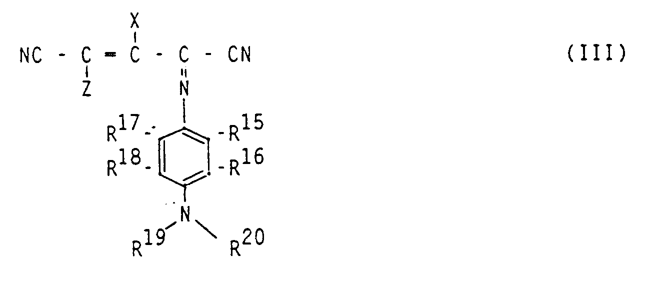 wherein:
X represents OR²¹ or NR²²R²³ or CN;
Z represents CN, COOR²⁴ or CONR²⁵R²⁶;
R¹⁵, R¹⁶, R¹⁷ and R¹⁸ each independently represent hydrogen, substituted or unsubstituted alkyl, substituted or unsubstituted cycloalkyl, substituted or unsubstituted aryl, substituted or unsubstituted alkoxy, substituted or unsubstituted aryloxy, substituted or unsubstituted carbonamido, substituted or unsubstituted sulfamido, hydroxy, halogen, NH-SO₂R²⁷, NH-COR²⁷, OSO₂R²⁷, OCOR²⁷, or R¹⁵ and R¹⁶ together and/or R¹⁷ and R¹⁸ together represent the necessary atoms to close (a) substituted or unsubstituted ring(s) fused-on the benzene ring or R¹⁶ and/or R¹⁸ together with R²⁰ and/or R¹⁹ represent the necessary atoms to close a substituted or unsubstituted heterocyclic ring fused-on the benzene ring;
R¹⁹ and R²⁰ each independently represent hydrogen, substituted or unsubstituted alkyl, substituted or unsubstituted cycloalkyl, substituted or unsubstituted aryl, a substituted or unsubstituted heterocyclic group or R¹⁹ and R²⁰ together represent the necessary atoms to close a substituted or unsubstituted heterocyclic ring or R²⁰ and/or R¹⁹ together with R¹⁶ and/or R¹⁸ represent the necessary atoms to close a substituted or unsubstituted heterocyclic ring fused-on the benzene ring;
R²¹ represents hydrogen, substituted or unsubstituted alkyl, substituted or unsubstituted cycloalkyl, substituted or unsubstituted aryl, SO₂R²⁷, COR²⁷, CSR²⁷, POR²⁷R²⁸;
R²² and R²³ each independently represent hydrogen, substituted or unsubstituted alkyl, substituted or unsubstituted cycloalkyl, substituted or unsubstituted aryl, substituted or unsubstituted amino, SO₂R²⁷, COR²⁷, CSR²⁷, POR²⁷R²⁸, or R²² and R²³ together represent the necessary atoms to close a substituted or unsubstituted heterocyclic ring, including a heterocyclic ring with an aliphatic or aromatic ring fused-on;
R²⁴, R²⁵ and R²⁶ each independently represent hydrogen, substituted or unsubstituted alkyl, substituted or unsubstituted cycloalkyl, substituted or unsubstituted aryl, or R²⁵ and R²⁶ together represent the necessary atoms to close a substituted or unsubstituted heterocyclic ring;
R²⁷ and R²⁸ each independently represent substituted or unsubstituted alkyl, substituted or unsubstituted cycloalkyl, substituted or unsubstituted alkenyl, substituted or unsubstituted aralkyl, substituted or unsubstituted aryl, substituted or unsubstituted alkoxy, substituted or unsubstituted aryloxy, substituted or unsubstituted alkylthio, substituted or unsubstituted arylthio, substituted or unsubstituted amino, a substituted or unsubstituted heterocyclic group or R²⁷ and R²⁸ together represent the necessary atoms to close a 5- or 6-membered ring.

6. Dye-donor element according to any one of the preceding claims, wherein the compounding ratio of the thiazolylazoaniline dyes in the cyan dye mixture is from 5 to 60 % by weight.

7. Dye-donor element according to any one of the preceding claims, wherein the dye layer contains polystyrene-co-acrylonitrile as binder.

8. Dye-donor element according to any one of the preceding claims, wherein said dye-donor element further contains in another dye area a yellow dye corresponding to general formula (IV) 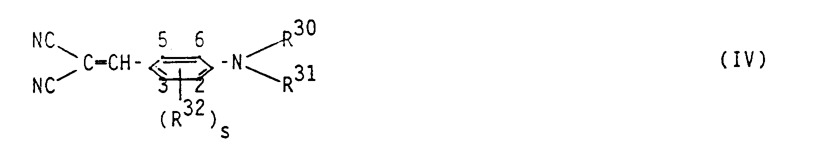 wherein :
R³⁰ and R³¹ (same or different) represent hydrogen, an alkyl group, a cycloalkyl group or an aryl group, which groups may be substituted, or R³⁰ and R³¹ may be joined together to form a 5- or 6-membered heterocyclic ring system, which ring may be substituted, or each of R³⁰ and R³¹ can be joined to the carbon atom of the aromatic ring at a position ortho to the position of attachment of the anilino nitrogen to form a 5- or 6-membered ring, which ring may be substituted;
R³² represents a substituent;
s represents 0, 1, 2, 3 or 4, the R³² substituents may be the same or different when s is greater than 1.

9. Dyed receiving element comprising a support provided with a dye-image receiving layer containing dyes in imagewise distribution, formed by thermal dye sublimation transfer using a dye-donor element according to any one of the preceding claims.

## Patentansprüche

1. Farbstoffdonorelement, das einen mit einer einen Cyanindoanilinfarbstoff und/oder einen weiteren Cyanazomethinfarbstoff enthaltenden Farbstoffschicht versehenen Träger enthält, dadurch gekennzeichnet, daß die Farbstoffschicht weiterhin einen der nachstehenden allgemeinen Formel (I) entsprechenden Cyanthiazolylazoanilinfarbstoff enthält : 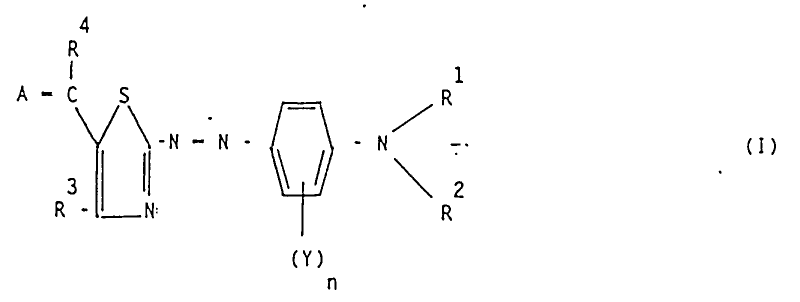 in der bedeuten :
A O, N-R⁵ oder CR⁶R⁷,
Y jeden beliebigen Substituenten,
n 0, 1, 2, 3 oder 4, wobei die Y-Substituenten gleich oder verschieden sind, falls n größer als 1 ist,
R¹ und R² (gleich oder verschieden) je Wasserstoff, eine gegebenenfalls substituierte Alkylgruppe, Cycloalkylgruppe oder Arylgruppe, oder in der R¹ und R² zur Bildung eines fünf- oder sechsgliedrigen, gegebenenfalls substituierten, heterocyclischen Ringsystems miteinander verbunden werden können, oder in der R¹ und R², unabhängig voneinander, je zur Bildung eines fünf- oder sechsgliedrigen, gegebenenfalls substituierten Ringes an einer ortho-Stellung gegenüber der Stellung der Befestigung des Anilinstickstoffatoms mit dem Kohlenstoffatom des aromatischen Ringes verbunden werden können,
R³ einen Substituenten,
R⁴ Wasserstoff oder einen elektronenanziehenden Substituenten,
wobei R⁵ H, CN, NR⁸R⁹, OR⁸, OCOR⁸, OCOOR⁸, OCONR⁸R⁹, OSO₂R⁸ oder OPO(OR⁸)(OR⁹) bedeutet,
R⁶ und R⁷ (gleich oder verschieden) eine elektronenanziehende Gruppe bedeuten, und
R⁸ und R⁹ (gleich oder verschieden) Wasserstoff, eine substituierte oder nicht-substituierte Alkylgruppe, eine substituierte oder nicht-substituierte Arylgruppe, eine substituierte oder nicht-substituierte Cycloalkylgruppe bedeuten oder R⁸ und R⁹ zusammen die zum Vervollständigen eines heterocyclischen Ringes oder substituierten heterocyclischen Ringes benötigten Atome bedeuten.

2. Farbstoffdonorelement nach Anspruch 1, dadurch gekennzeichnet, daß R³ eine Halogengruppe, eine OR¹⁰-Gruppe oder eine SR¹⁰-Gruppe bedeutet, wobei R¹⁰ Wasserstoff, eine substituierte oder nicht-substituierte Alkylgruppe, eine substituierte oder nicht-substituierte Cycloalkylgruppe oder eine substituierte oder nicht-substituierte Arylgruppe bedeutet.

3. Farbstoffdonorelement nach Anspruch 2, dadurch gekennzeichnet, daß R¹ und R² beide eine Alkylgruppe, R³ eine Chlorgruppe oder eine Methoxygruppe, R⁴ Wasserstoff, A C(CN)₂ und n 0 bedeuten.

4. Farbstoffdonorelement nach irgendeinem der vorstehenden Ansprüche, dadurch gekennzeichnet, daß der Cyanindoanilinfarbstoff der folgenden allgemeinen Formel (II) entspricht : 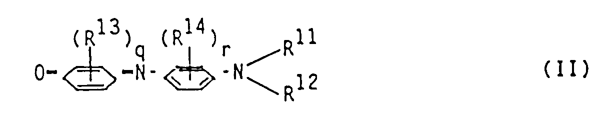 in der :
R¹¹ und R¹² (gleich oder verschieden) Wasserstoff, eine gegebenenfalls substituierte Alkylgruppe, Cycloalkylgruppe, Arylgruppe, Allylgruppe oder Alkenylgruppe bedeuten, oder R¹¹ und R¹² zusammen mit dem Stickstoffatom, mit dem sie verbunden sind, die zum Schließen eines fünf- oder sechsgliedrigen, heterocyclischen, gegebenenfalls substituierten Ringes benötigten Atome bedeuten, oder in der R¹¹ und/oder R¹² zusammen mit dem Stickstoffatom, mit dem sie verbunden sind, und einem oder beiden Kohlenstoffatomen des an ortho-Stellung gegenüber dem Stickstoffatom befindlichen Phenylrings einen fünf- oder sechsgliedrigen, heterocyclischen, gegebenenfalls substituierten Ring bilden,
R¹³ eine gegebenenfalls substituierte Halogen-, Hydroxyl-, Cyan-, Alkyl-, Cycloalkyl-, Aryl-, Alkoxy-, Aryloxy-, Alkylthio-, Arylthio-, Amino-, Di(alkyl oder aryl)amino-, Alkylcarbonylamino-, Arylcarbonylamino-, Arylsulfonylamino-, Alkoxycarbonylamino-, Aryloxycarbonylamino-, Alkylthiocarbonylamino-, Arylthiocarbonylamino-, alkylphosphoramidat-, Arylphosphoramidat-, Alkylphosphonamidat-, Arylphosphonamidat-, Alkylaminocarbonyl- oder Arylaminocarbonylgruppe bedeutet, oder R¹³ die zum Schließen eines alicyclischen oder aromatischen oder heterocyclischen, auf dem Phenylenring anellierten (gegebenenfalls substituierten) Ringes benötigten Atome bedeutet,
q 0, 1, 2, 3 oder 4 bedeutet, wobei die R¹³-Substituenten gleich oder verschieden sein können, falls q größer als 1 ist,
R¹⁴ eine der R¹³ zugemessenen Bedeutungen hat oder die zum Schließen eines alicyclischen oder aromatischen oder heterocyclischen, auf dem Phenylring anellierten (gegebenenfalls substituierten) Ringes benötigten Atome bedeuten kann,
r 0, 1, 2, 3 oder 4 bedeutet, wobei die R¹⁴-Substituenten gleich oder verschieden sein können, falls r größer als 1 ist.

5. Farbstoffdonorelement nach irgendeinem der vorstehenden Ansprüche, dadurch gekennzeichnet, daß der andere Cyanazomethinfarbstoff der allgemeinen Formel (III) entspricht : 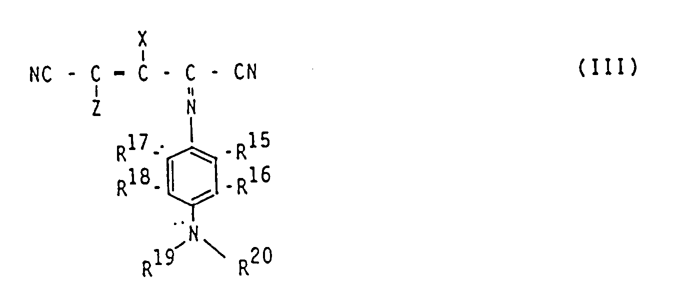 in der bedeuten :
X OR²¹ oder NR²²R²³ oder CN,
Z CN, COOR²⁴ oder CONR²⁵R²⁶,
R¹⁵, R¹⁶, R¹⁷ und R¹⁸, unabhängig voneinander, je Wasserstoff, eine substituierte oder nicht-substituierte Alkylgruppe, eine substituierte oder nicht-substituierte Cycloalkylgruppe, eine substituierte oder nicht-substituierte Arylgruppe, eine substituierte oder nicht-substituierte Alkoxygruppe, eine substituierte oder nicht-substituierte Aryloxygruppe, eine substituierte oder nicht-substituierte Carbonamidogruppe, eine substituierte oder nicht-substituierte Sulfamidogruppe, eine Hydroxylgruppe, eine Halogengruppe, NH-SO₂R²⁷, NH-COR²⁷, OSO₂R²⁷, OCOR²⁷, oder R¹⁵ und R¹⁶ zusammen und/oder R¹⁷ und R¹⁸ zusammen die zum Schließen eines oder mehrerer, substituierter oder nicht-substituierter, auf dem Benzolring anellierten Ringe benötigten Atome oder R¹⁶ und/oder R¹⁸ zusammen mit R²⁰ und/oder R¹⁹ die zum Schließen eines substituierten oder nicht-substituierten, auf dem Benzolring anellierten, heterocyclischen Ringes benötigten Atome,
R¹⁹ und R²⁰, unabhängig voneinander, je Wasserstoff, eine substituierte oder nicht-substituierte Alkylgruppe, eine substituierte oder nicht-substituierte Cycloalkylgruppe, eine substituierte oder nicht-substituierte Arylgruppe, eine substituierte oder nicht-substituierte heterocyclische Gruppe oder R¹⁹ und R²⁰ zusammen die zum Schließen eines substituierten oder nicht-substituierten heterocyclischen Ringes benötigten Atome oder R²⁰ und/oder R¹⁹ zusammen mit R¹⁶ und/oder R¹⁸ die zum Schließen eines substituierten oder nicht-substituierten, heterocyclischen, auf dem Benzolring anellierten Ringes benötigten Atome,
wobei R²¹ Wasserstoff, eine substituierte oder nicht-substituierte Alkylgruppe, eine substituierte oder nicht-substituierte Cycloalkylgruppe, eine substituierte oder nicht-substituierte Arylgruppe, SO₂R²⁷, COR²⁷, CSR²⁷ oder POR²⁷R²⁸ bedeutet,
R²² und R²³, unabhängig voneinander, je Wasserstoff, eine substituierte oder nicht-substituierte Alkylgruppe, eine substituierte oder nicht-substituierte Cycloalkylgruppe, eine substituierte oder nicht-substituierte Arylgruppe, eine substituierte oder nicht-substituierte Aminogruppe, SO₂R²⁷, COR²⁷, CSR²⁷ oder POR²⁷R²⁸ bedeuten, oder R²² und R²³ zusammen die zum Schließen eines gegebenenfalls substituierten heterocyclischen Ringes, einschließlich eines heterocyclischen Ringes mit einem aliphatischen oder aromatischen, anellierten Ring, benötigten Atome bedeuten,
R²⁴, R²⁵ und R²⁶, unabhängig voneinander, je Wasserstoff, eine substituierte oder nicht-substituierte Alkylgruppe, eine substituierte oder nicht-substituierte Cycloalxylgruppe, eine substituierte oder nicht-substituierte Arylgruppe bedeuten, oder R²⁵ und R²⁶ zusammen die zum Schließen eines gegebenenfalls substituierten heterocyclischen Ringes benötigten Atome bedeuten,
R²⁷ und R²⁸, unabhängig voneinander, je eine substituierte oder nicht-substituierte Alkylgruppe, eine substituierte oder nicht-substituierte Cycloalkylgruppe, eine substituierte oder nicht-substituierte Alkenylgruppe, eine substituierte oder nicht-substituierte Aralkylgruppe, eine substituierte oder nicht-substituierte Arylgruppe, eine substituierte oder nicht-substituierte Alkoxygruppe, eine substituierte oder nicht-substituierte Aryloxygruppe, eine substituierte oder nicht-substituierte Alkylthiogruppe, eine substituierte oder nicht-substituierte Arylthio, eine substituierte oder nicht-substituierte Aminogruppe, eine substituierte oder nicht-substituierte heterocyclische Gruppe bedeuten oder R²⁷ und R²⁸ zusammen die zum Schließen eines fünf- oder sechsgliedrigen Ringes benötigten Atome bedeuten.

6. Farbstoffdonorelement nach irgendeinem der vorstehenden Ansprüche, dadurch gekennzeichnet, daß das Mischverhältnis der Thiazolylazoanilinfarbstoffe in der Cyanfarbstoffmischung zwischen 5 und 60 Gew.-% liegt.

7. Farbstoffdonorelement nach irgendeinem der vorstehenden Ansprüche, dadurch gekennzeichnet, daß die Farbstoffschicht als Bindemittel Polystyrol-co-acrylonitril enthält.

8. Farbstoffdonorelement nach irgendeinem der vorstehenden Ansprüche, dadurch gekennzeichnet, daß das Farbstoffdonorelement weiterhin in einem anderen Farbstoffbereich einen Gelbfarbstoff nach der folgenden allgemeinen Formel (IV) enthält : 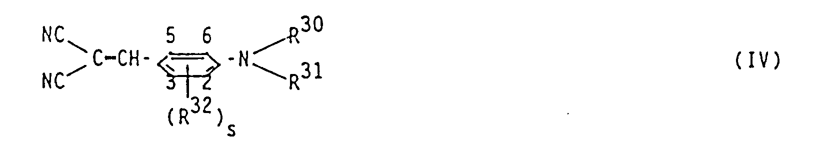 in der bedeuten :
R³⁰ und R³¹ (gleich oder verschieden) Wasserstoff, eine gegebenenfalls substituierte Alkylgruppe, Cycloalkylgruppe oder Arylgruppe, oder in der R³⁰ und R³¹ zur Bildung eines fünf- oder sechsgliedrigen, gegebenenfalls substituierten, heterocyclischen Ringsystems miteinander verbunden werden können, oder in der R³⁰ und R³¹, unabhängig voneinander, je zur Bildung eines fünf- oder sechsgliedrigen, gegebenenfalls substituierten Ringes an einer ortho-Stellung gegenüber der Stellung der Befestigung des Anilinstickstoffatoms mit dem Kohlenstoffatom des aromatischen Ringes verbunden werden können,
R³² einen Substituenten,
s 0, 1, 2, 3 oder 4, wobei die R³²-Substituenten gleich oder verschieden sein können, falls s größer als 1 ist.

9. Gefärbtes Empfangselement, das einen mit einer bildmäßig verteilte Farbstoffe enthaltenden Farbstoffbildempfangsschicht versehenen Träger enthält, wobei das gefärbte Empfangselement durch thermische Farbstoffsublimationsübertragung mittels eines irgendeinem der vorstehenden Ansprüche entsprechenden Farbstoffdonorelements gebildet ist.

## Revendications

1. Elément donneur de colorant comprenant un support muni d'une couche de colorant contenant un colorant cyan d'indoaniline et/ou un autre colorant cyan d'azométhine, caractérisé en ce que cette couche de colorant comprend en plus un colorant cyan de thiazolylazoaniline correspondant à la formule générale suivante (I): 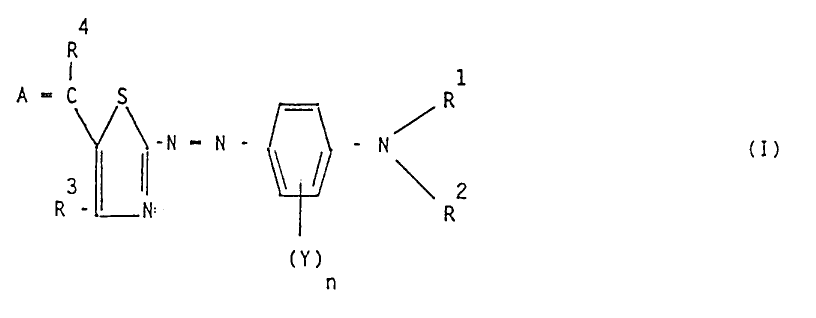 dans laquelle:
A représente O, N-R⁵, CR⁶R⁷;
Y représente n'importe quel subsituant;
n représente 0, 1, 2, 3 ou 4, les substituants Y étant identiques ou différents quand n est plus grand que 1;
R¹ et R² (identiques ou différents) représentent chacun un atome d'hydrogène, un groupe alkyle, un groupe cycloalkyle ou un groupe aryle, lesquels groupes peuvent être substitués, ou R¹ et R² peuvent être liés ensemble pour former un système à noyau hétérocyclique pentagonal ou hexagonal qui peut être substitué, ou R¹ et R² peuvent chacun, l'un indépendamment de l'autre, être liés à l'atome de carbone du noyau aromatique en une position ortho par rapport à la position de liaison de l'azote anilino pour former un noyau pentagonal ou hexagonal. lequel noyau peut être substitué;
R³ représente un substituant;
R⁴ représente un atome d'hydrogène ou un substituant accepteur d'électrons;
R⁵ représente H, CN, NR⁸R⁹, OR⁸, OCOR⁸, OCOOR⁸, OCONR⁸R⁹, OSO₂R⁸, OPO(OR⁸)(OR⁹);
R⁶ et R⁷ (identiques ou différents) représentent un groupe accepteur d'électrons;
R⁸ et R⁹ (identiques ou différents) représentent un atome d'hydrogène, un groupe alkyle substitué ou non substitué, un groupe aryle substitué ou non substitué, un groupe cycloalkyle substitué ou non substitué, ou R⁸ et R⁹ ensemble représentent les atomes nécessaires pour compléter un noyau hétérocyclique ou un noyau hétérocyclique substitué.

2. Elément donneur de colorant selon la revendication 1, caractérisé en ce que R³ représente un atome d'halogène, OR¹⁰ ou SR¹⁰, R¹⁰ représentant un atome d'hydrogène, un groupe alkyle substitué ou non substitué, un groupe cycloalkyle substitué ou non substitué, un groupe aryle substitué ou non substitué.

3. Elément donneur de colorant selon la revendication 2, caractérisé en ce que R¹ et R² représentent tous deux un groupe alkyle, R³ représente un atome de chlore ou un groupe méthoxy, R⁴ représente un atome d'hydrogène, A représente C(CN)₂ et n représente 0.

4. Elément donneur de colorant selon l'une quelconque des revendications précédentes, caractérisé en ce que le colorant cyan d'indoaniline correspond à la formule générale suivante (II): 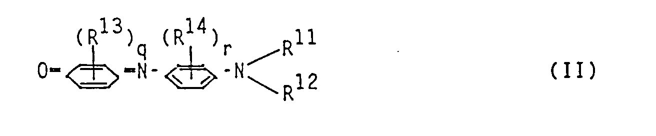 dans laquelle:
R¹¹ et R¹² (identiques ou différents) représentent un atome d'hydrogène, un groupe alkyle, un groupe cycloalkyle, un groupe aryle, un groupe allyle ou un groupe alcényle, lesquels groupes peuvent être substitués, ou R¹¹ et R¹², ensemble avec l'atome d'azote auquel ils sont attachés, forment les atomes nécessaires pour compléter un noyau hétérocyclique pentagonal ou hexagonal, lequel noyau peut être substitué, ou R¹¹ et/ou R¹², ensemble avec l'atome d'azote auquel ils sont attachés et un ou les deux atomes de carbone du noyau phényle en position ortho par rapport à cet atome d'azote forment un noyau hétérocyclique pentagonal ou hexagonal. lequel noyau peut être substitué;
R¹³ représente un atome d'halogène, un groupe hydroxy, un groupe cyano, un groupe alkyle, un groupe cycloalkyle, un groupe aryle, un groupe alkoxy, un groupe aryloxy, un groupe alkylthio, un groupe arylthio, un groupe amino, un groupe di(alkyl ou aryl)amino, un groupe alkylcarbonylamino, un groupe arylcarbonylamino group, un groupe arylsulfonylamino, un groupe alkoxycarbonylamino, un groupe aryloxycarbonylamino, un groupe alkylthiocarbonylamino, un groupe arylthiocarbonylamino, un groupe alkylphosphoramidate, un groupe arylphosphoramidate, un groupe alkylphosphonamidate, un groupe arylphosphonamidate, un groupe alkylaminocarbonyle ou un groupe arylaminocarbonyle, lesquels groupes peuvent être substitués, ou R¹³ représente les atomes nécessaires pour fermer un noyau hétérocyclique ou aromatique ou alicyclique (lesquels noyaux peuvent être substitués) condensé sur le noyau phénylène;
q représente 0, 1, 2, 3 ou 4, les substituants R¹³ peuvent être identiques ou différents quand q est plus grand que 1;
R¹⁴ peut avoir uné des significations données à R¹³ ou peut représenter les atomes nécessaires pour compléter un noyau hétérocyclique, aromatique ou alicyclique (lequel noyau peut être substitué) condensé sur le noyau phényle;
r représente 0, 1, 2, 3 ou 4, les substituants R¹⁴ peuvent être identiques ou différents quand r est plus grand que 1.

5. Elément donneur de colorant selon l'une quelconque des revendications précédentes, caractérisé en ce que l'autre colorant cyan d'azométhine correspond à la formule générale suivante (III) 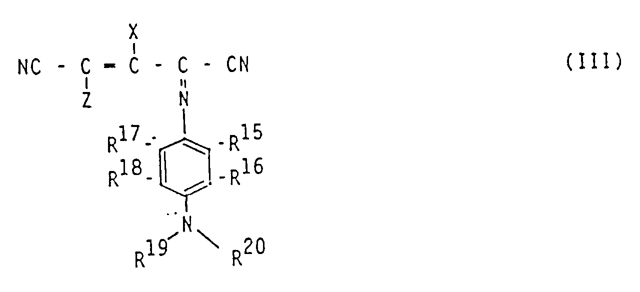 dans laquelle:
X représente OR²¹ ou NR²²R²³ ou CN;
Z représente CN, COOR²⁴ ou CONR²⁵R²⁶;
R¹⁵, R¹⁶, R¹⁷ et R¹⁸ , l'un indépendamment de l'autre, représentent chacun un atome d'hydrogène, un groupe alkyle substitué ou non substitué, un groupe cycloalkyle substitué ou non substitué, un groupe aryle substitué ou non substitué, un groupe alkoxy substitué ou non substitué, un groupe aryloxy substitué ou non substitué, un groupe carbonamido substitué ou non substitué, un groupe sulfamido substitué ou non substitué, un groupe hydroxy, un atome d'halogène, NH-SO₂R²⁷, NH-COR²⁷, OSO₂R²⁷, OCOR²⁷, ou R¹⁵ et R¹⁶ ensemble et/ou R¹⁷ et R¹⁸ ensemble représentent les atomes nécessaires pour compléter un ou plusieurs noyaux substitués ou non substitués condensés sur le noyau benzénique ou R¹⁶ et/ou R¹⁸ ensemble avec R²⁰ et/ou R¹⁹ représentent les atomes nécessaires pour compléter un noyau hétérocyclique substitué ou non substitué condensé sur le noyau benzénique;
R¹⁹ et R²⁰, l'un indépendamment de l'autre, représentent chacun un atome d'hydrogène, un groupe alkyle substitué ou non substitué, un groupe cycloalkyle substitué ou non substitué, un groupe aryle substitué ou non substitué, un groupe hétérocyclique substitué ou non substitué ou R¹⁹ et R²⁰ ensemble représentent les atomes nécessaires pour compléter un noyau hétérocyclique substitué ou non substitué ou R²⁰ et/ou R¹⁹ ensemble avec R¹⁶ et/ou R¹⁸ représentent les atomes nécessaires pour compléter un noyau hétérocyclique substitué ou non substitué condensé sur le noyau benzénique;
R²¹ représente un atome d'hydrogène, un groupe alkyle substitué ou non substitué, un groupe cycloalkyle substitué ou non substitué, un groupe aryle substitué ou non substitué, SO₂R²⁷, COR²⁷, CSR²⁷, POR²⁷R²⁸;
R²² et R²³, l'un indépendamment de l'autre, représentent chacun un atome d'hydrogène, un groupe alkyle substitué ou non substitué, un groupe cycloalkyle substitué ou non substitué, un groupe aryle substitué ou non substitué, un groupe amino substitué ou non substitué, SO₂R²⁷, COR²⁷, CSR²⁷, POR²⁷R²⁸, ou R²² et R²³ ensemble représentent les atomes nécessaires pour compléter un noyau hétérocyclique substitué ou non substitué, y compris un noyau hétérocyclique avec un noyau aromatique ou aliphatique condensé;
R²⁴, R²⁵ et R²⁶, l'un indépendamment de l'autre, représentent chacun un atome d'hydrogène, un groupe alkyle substitué ou non substitué, un groupe cycloalkyle substitué ou non substitué, un groupe aryle substitué ou non substitué, ou R²⁵ et R²⁶ ensemble représentent les atomes nécessaires pour compléter un noyau hétérocyclique substitué ou non substitué;
R²⁷ et R²⁸, l'un indépendamment de l'autre, représentent chacun un groupe alkyle substitué ou non substitué, un groupe cycloalkyle substitué ou non substitué, un groupe alcényle substitué ou non substitué, un groupe aralkyle substitué ou non substitué, un groupe aryle substitué ou non substitué, un groupe alkoxy substitué ou non substitué, un groupe aryloxy substitué ou non substitué, un groupe alkylthio substitué ou non substitué, un groupe arylthio substitué ou non substitué, un groupe amino substitué ou non substitué, un groupe hétérocyclique substitué ou non substitué, ou R²⁷ et R²⁸ ensemble représentent les atomes nécessaires pour compléter un noyau pentagonal ou hexagonal.

6. Elément donneur de colorant selon l'une quelconque des revendications précédentes, caractérisé en ce que le taux de mélange des colorants de thiazolylazoaniline dans le mélange de colorants cyan est de 5 à 60 % en poids.

7. Elément donneur de colorant selon l'une quelconque des revendications précédentes, caractérisé en ce que la couche de colorant contient du poly(styrène-*co*-acrylonitrile) comme liant.

8. Elément donneur de colorant selon l'une quelconque des revendications précédentes, caractérisé en ce que l'élément donneur de colorant contient en plus dans une autre zone de colorant un colorant jaune correspondant à la formule générale (IV) 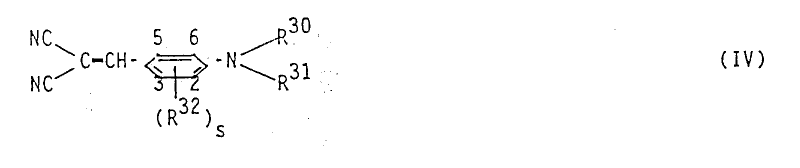 dans laquelle:
R³⁰ et R³¹ (identiques ou différents) représentent un atome d'hydrogène, un groupe alkyle, un groupe cycloalkyle ou un groupe aryle, lesquels groupes peuvent être substitués, ou R³⁰ et R³¹ peuvent être liés ensemble pour former un système à noyau hétérocyclique pentagonal ou hexagonal, lequel noyau peut être substitué, ou chacun de R³⁰ and R³¹ peuvent être liés à l'atome de carbone du noyau aromatique en une position ortho par rapport à la position de liaison de l'azote anilino pour former un noyau pentagonal ou hexagonal, lequel noyau peut être substitué,
R³² représente un substituant;
s représente 0, 1, 2, 3 ou 4, les substituants R³² peuvent être identiques ou différents quand s est plus grand que 1.

9. Elément récepteur coloré comprenant un support sur lequel se trouve un couche réceptrice d'image de colorant contenant des colorants en distribution sous forme d'image, formé par le transfert de colorant par thermosublimation en utilisant un élément donneur de colorant selon l'une quelconque des revendications précédentes.
